# EUROPÄISCHE PATENTSCHRIFT

(11) **EP 1 896 757 B1**
(45) Veröffentlichungstag und Bekanntmachung des Hinweises auf die Patenterteilung: **14.12.2011**
(21) Anmeldenummer: 06753974.2
(22) Anmeldetag: 30.05.2006
(51) Int. Cl.: F16K 27/02

(54) **ABSPERRARMATUR**
SHUT-OFF DEVICE
ARMATURE DE VERROUILLAGE

(30) Priorität: 17.06.2005 DE 102005028198
(43) Veröffentlichungstag der Anmeldung: 12.03.2008
(73) Patentinhaber: Metso Automation MAPAG GmbH, 86497 Horgau (DE)
(72) Erfinder: GERCEKER, Metin, 86356 Neusäss (DE)
(74) Vertreter: Geirhos, Johann
(86) Internationale Anmeldenummer: PCT/EP2006/005139
(87) Internationale Veröffentlichungsnummer: WO 2006/133803

(56) Entgegenhaltungen:
- EP-A- 0 942 212
- DE-A1- 19 508 789
- GB-A- 1 139 182
- GB-A- 2 206 672
- GB-A- 2 222 869
- US-A- 4 281 680
- US-A- 6 039 069

## Beschreibung

Die Erfindung betrifft eine Tieftemperaturabsperrarmatur für kryogene Medien mit einem Gehäuse, einem in dem Gehäuse angeordneten Ventilsitz und einer den Ventilsitz ansteuernden Absperrklappe, die im Gehäuse drehbar gelagert ist, wobei an dem Gehäuse zumindest ein Flansch als Schweißflansch zur Befestigung der Tieftemperaturabsperrarmatur in einer Rohrleitung mittels einer Schweißverbindung, insbesondere einer Stumpfschweißverbindung, ausgebildet ist und das Gehäuse mit einer Gehäuseöffnung zur Montage und/oder Demontage der Absperrklappe versehen ist.

Derartige Tieftemperatur-Absperrarmaturen werden zur Absperrung von Rohrleitungen verwendet, in denen kryogene Medien, beispielsweise flüssiges Erdgas, flüssiger Wasserstoff, flüssige Luft oder deren Bestandteile, insbesondere flüssiger Stickstoff, flüssiger Sauerstoff oder flüssiges Helium strömen.

Zur Befestigung der Tieftemperatur-Absperrarmatur in der Rohrleitung ist das Gehäuse der Absperrarmatur an beiden rohrseitigen Enden mit jeweils einem Befestigungsflansch versehen. Bei bekannten Tieftemperatur-Absperrarmaturen ist der Befestigungsflansch als Schraubflansch ausgebildet, wobei der Befestigungsflansch von einem am Außenumfang des Gehäuses angeordneten ringförmigen Flanschbauteil gebildet ist, das mit Durchgangsbohrungen zur Aufnahme von Befestigungsschrauben ausgebildet ist.

Derartige Befestigungsflansche weisen jedoch einen hohen Bauaufwand auf. Zudem ist zur Abdichtung der Absperrarmatur gegen Leckage im Bereich des Befestigungsflansches eine Dichteinrichtung erforderlich, beispielsweise eine Ringdichtung, die aufgrund der Tieftemperatur-Anwendung einen hohen Bauaufwand verursacht.

Bei bekannten Tieftemperatur-Absperrarmaturen ist der Ventilsitz und die Absperrklappe in Längsrichtung des Gehäuses montier- bzw. demontierbar. Zur Wartung der Absperrarmatur muss somit die Absperrarmatur mittels der Befestigungsflansche aus der Rohrleitung entfernt werden, um den Ventilsitz und die Absperrklappe aus dem Gehäuse demontieren zu können. Hierdurch verursacht die Absperrarmatur einen hohen Wartungsaufwand.

Aus der US-A-4 281 680 ist eine Absperrarmatur bekannt, bei der das Gehäuse mit Schweißflanschen versehen ist, um die Absperrarmatur in einer Rohrleitung einzuschweißen. Die Absperrklappe in einem Lagerbauteil drehbar gelagert, das an einem Ventilsitzstutzen angeschweißt ist, der mit dem Ventilsitz versehen ist. An dem Gehäuse der Absperrarmatur ist eine Öffnung zum Aus- und Einbau der Absperrklappe und des Ventilsitzstutzens vorhanden. Die Öffnung ist durch einen Dom verschlossen.

Aus der US-A-6 039 069 ist eine Absperrarmatur bekannt, bei der ein äußeres Gehäuse in eine Rohrleitung eingeschweißt ist und ein inneres Gehäuse mit einem Ventilsitz und einer drehbaren Absperrklappe versehen ist. Das innere Gehäuse ist leicht kegelig und kann aus dem äußeren Gehäuse, das in die Rohrleitung eingeschweißt ist, als Ganzes entnommen werden.

Der vorliegenden Erfindung liegt die Aufgabe zugrunde, eine Tieftemperatur-Absperrarmatur der eingangs genannten Gattung zur Verfügung zu stellen, die einen geringen Bauaufwand und Wartungsaufwand verursacht.

Diese Aufgabe wird erfindungsgemäß dadurch gelöst, dass die Absperrklappe mit einer Antriebswelle in Wirkverbindung steht, die in einem die Gehäuseöffnung verschließenden Lagerbauteil gelagert ist, wobei das Lagerbauteil an dem Gehäuse im Bereich der Gehäuseöffnung lösbar befestigt ist. Mit einem Schweißflansch, wobei das Gehäuse mittels einer Schweißverbindung, insbesondere einer Stumpfschweißverbindung, mit der Rohrleitung verbunden wird, kann mit geringem Bauaufwand eine leckagefreie Verbindung des Gehäuses und somit der Absperrarmatur mit der Rohrleitung erzielt werden und ein sicherer Betrieb der Absperrarmatur ermöglicht werden. Durch die Montage bzw. Demontage der Absperrklappe durch die Gehäuseöffnung kann zudem ein geringer Wartungsaufwand erzielt werden, wobei das Gehäuse mit der Rohrleitung verbunden bleibt und die Absperrklappe auf einfache Weise über die Gehäuseöffnung montierbar bzw. demontierbar ist. Erfindungsgemäß steht die Absperrklappe mit einer Antriebswelle in Wirkverbindung, die in einem Lagerbauteil gelagert ist, wobei das Lagerbauteil an dem Gehäuse im Bereich der Gehäuseöffnung lösbar befestigt ist. Mit einem an dem Gehäuse befestigbaren Lagerbauteil kann auf einfache Weise die Absperrklappe drehbar im Gehäuse angeordnet und gelagert werden.

Besondere Vorteile ergeben sich, wenn gemäß einer Ausführungsform der Erfindung der Ventilsitz an einem Ventilsitzbauteil ausgebildet ist, das im Gehäuse mittels eines Flansches, insbesondere eines Schraubflansches, lösbar befestigt ist, wobei das Ventilsitzbauteil durch die Gehäuseöffnung montierbar und/oder demontierbar ist. Über die Gehäuseöffnung kann das Ventilsitzbauteil auf einfache Weise bei in der Rohrleitung angeordnetem Gehäuse zu Wartungszwecken montiert und demontiert werden. Zudem ist es hierdurch auf einfache Weise möglich, Ventilsitzbauteile mit unterschiedlichen Ventilsitzen und/oder Dichtungssystemen im Gehäuse anzuordnen, wodurch die Absperrarmatur auf einfache Weise an unterschiedliche Einsatzbedingungen angepasst werden kann.

Zweckmäßigerweise ist die Gehäuseöffnung senkrecht zur Drehachse der Absperrklappe angeordnet, wodurch eine einfache Montage und Demontage der Absperrklappe und des Ventilsitzbauteils über die Gehäuseöffnung ermöglicht wird.

Der Gehäusedurchmesser des Gehäuses entspricht im Bereich des Schweißflansches dem Durchmesser der Rohrleitung. Hierdurch kann auf einfache Weise das Gehäuse mittels einer Stumpfschweißverbindung mit der Rohrleitung verbunden werden, wobei während des Verschweißens Beschädigungen an der Absperrklappe und dem Ventilsitz wirksam vermieden werden können.

Zweckmäßigerweise weist die Antriebswelle einen in dem Lagerbauteil gelagerten Wellenabschnitt und einen in dem Gehäuse gelagerten Wellenabschnitt auf, wobei die Absperrklappe an den Wellenabschnitten lösbar befestigt ist. Durch eine derartige geteilte Antriebswelle, an der die Absperrklappe lösbar befestigt ist, wobei ein Wellenabschnitt im Lagerbauteil und ein Wellenabschnitt gegenüberliegend zum Lagerbauteil im Gehäuse gelagert ist, kann auf einfache Weise in der Rohrleitung bei geöffneter Absperrklappe ein großer Durchflussquerschnitt erzielt werden.

Sofern gemäß einer bevorzugten Weiterbildung der Erfindung an dem Lagerbauteil eine mit der Antriebswelle in Wirkverbindung stehende Antriebseinrichtung befestigt ist, ergibt sich eine günstige und einfache Anordnung der Antriebseinrichtung zum Antrieb der Absperrklappe.

Gemäß einer bevorzugten Ausgestaltungsform der Erfindung ist an der Gehäuseöffnung ein Befestigungsflansch, insbesondere ein Schraubflansch, zur Befestigung des Lagerbauteils ausgebildet. Mit einem derartigen Befestigungsflansch kann auf einfache Weise das Lagerbauteil, in dem die mit der Absperrklappe versehene Antriebswelle gelagert ist und an dem die Antriebseinrichtung angeordnet ist, an dem Gehäuse befestigt werden.

Sofern zwischen dem Befestigungsflansch und dem Lagerbauteil gemäß einer bevorzugten Weiterbildung der Erfindung eine Zentrier- und/oder Dichteinrichtung angeordnet ist, kann auf einfache Weise das Lagerbauteil mit der Antriebswelle und der Absperrklappe gegenüber dem mit dem Ventilsitz versehenen Gehäuse zentriert werden und eine Abdichtung der Gehäuseöffnung gegen Leckage erzielt werden.

Für die Zentrier- und/oder Dichteinrichtung ergibt sich ein geringer Bauaufwand, wenn die Zentrier- und/oder Dichteinrichtung gemäß einer Ausgestaltungsform der Erfindung als in einer umlaufenden Nut angeordneter Vorsprung ausgebildet ist.

An dem an der Gehäuseöffnung angeordneten Befestigungsflansch kann ein Blindflansch lösbar befestigt werden, mit dem bei zu Wartungs- oder Prüfungsarbeiten demontiertem Lagerbauteil und somit demontierter Absperrklappe und gegebenenfalls demontiertem Ventilsitzbauteil die Gehäuseöffnung mit geringem Bauaufwand verschlossen werden, um einen weiteren Betrieb der mit der Rohrleitung versehenen Anlage zu ermöglichen.

Besondere Vorteile ergeben sich, wenn gemäß einer Weiterbildung der Erfindung an dem Gehäuse im Bereich des Schweißflansches eine Befestigungseinrichtung zum lösbaren Befestigen einer Prüfeinrichtung ausgebildet ist. Mit einer derartigen Befestigungseinrichtung kann nach der Herstellung der Absperrarmatur und vor der Montage des Gehäuses in der Rohrleitung auf einfache Weise eine Prüfeinrichtung befestigt werden, um eine Prüfung, insbesondere einen Dichtigkeitstest, der Absperrarmatur durchzuführen. Nach der Prüfung der Absperrarmatur ist hierbei keine weitere mechanische Bearbeitung der Absperrarmatur, insbesondere des Gehäuses im Bereich der Schweißflansche, erforderlich.

Zweckmäßigerweise ist die Befestigungseinrichtung als eine an dem Gehäuse angeordnete umlaufende Nut ausgebildet. An einer von einer Nut gebildeten Befestigungseinrichtung kann mit geringem Herstellaufwand die Prüfeinrichtung angeordnet werden.

Nach der Montage des Gehäuses in der Rohrleitung und somit nach dem Verschweißen des Gehäuses mit der Rohrleitung kann eine Überprüfung, insbesondere ein Dichtigkeits- und Funktionstest, der Absperrklappe und des Ventilsitzes auf einfache Weise durchgeführt werden, wenn ein Prüfgehäuse vorgesehen ist, in dem das mit der Absperrklappe versehene Lagerbauteil und das Ventilsitzbauteil lösbar befestigbar ist. Nach der Demontage des Lagerbauteil mit der Antriebswelle, der Antriebseinrichtung und der Absperrklappe sowie des Ventilsitzbauteils über die Gehäuseöffnung aus dem mit der Rohrleitung verschweißten Gehäuse und einer Befestigung des Ventilsitzbauteils und des mit der Absperrklappe, der Antriebseinrichtung sowie der Antriebseinrichtung versehenen Lagerbauteils in dem Prüfgehäuse kann ein Dichtigkeits- und Funktionstest der Absperrklappe und des Ventilsitzbauteils mit geringem Bauaufwand durchgeführt werden.

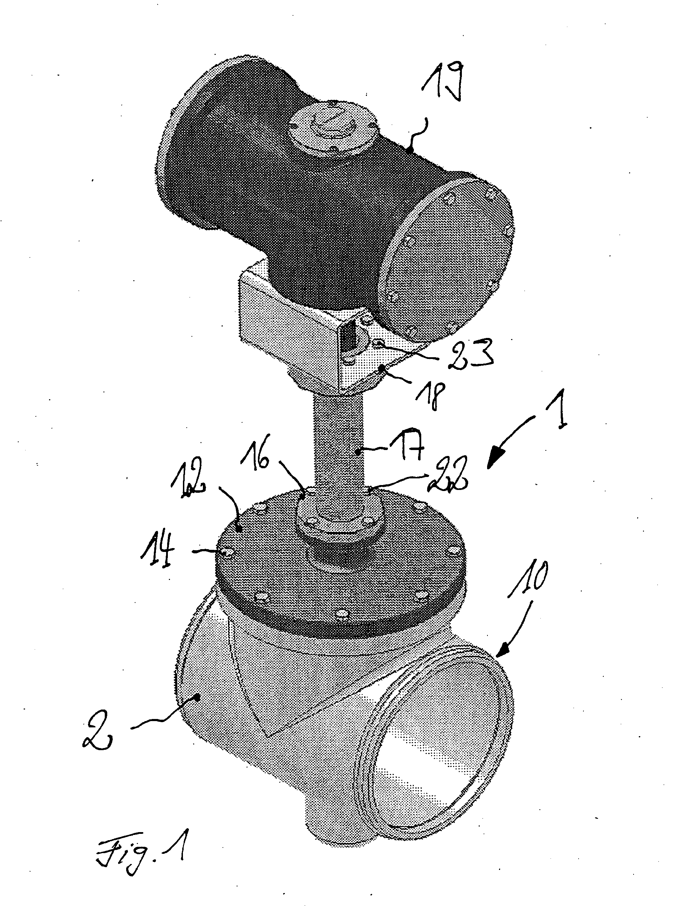

Weitere Vorteile und Einzelheiten der Erfindung werden anhand des in den schematischen Figuren dargestellten Ausführungsbeispiels näher erläutert. Hierbei zeigt
- Figur 1: eine perspektivische Darstellung einer erfindungsgemäßen Absperrarmatur,
- Figur 2: die Absperrarmatur in einem Längsschnitt,
- Figur 3: das Detail X der Figur 2 in einer vergrößerten Darstellung und

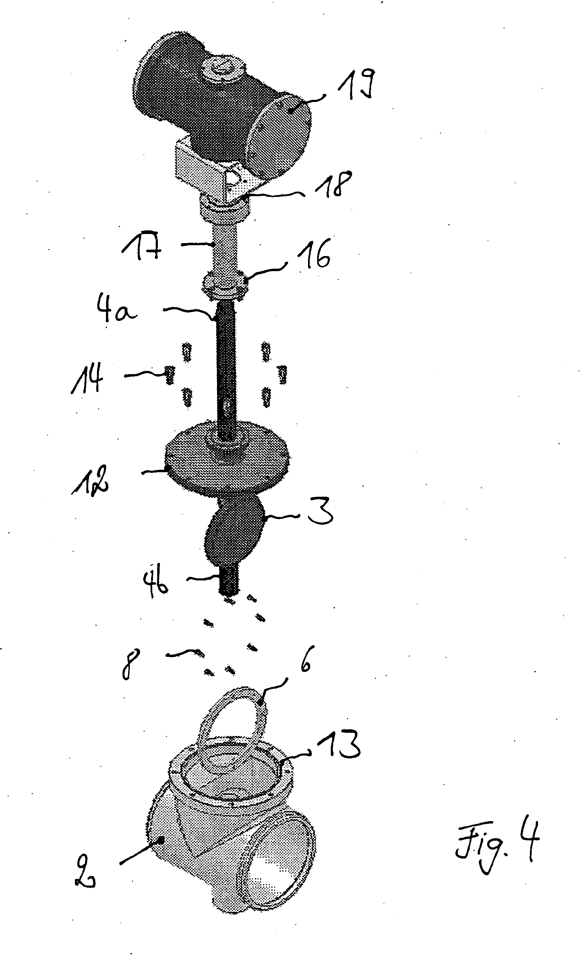

- Figur 4: die Absperrarmatur in einer Montage- /Demontageansicht.

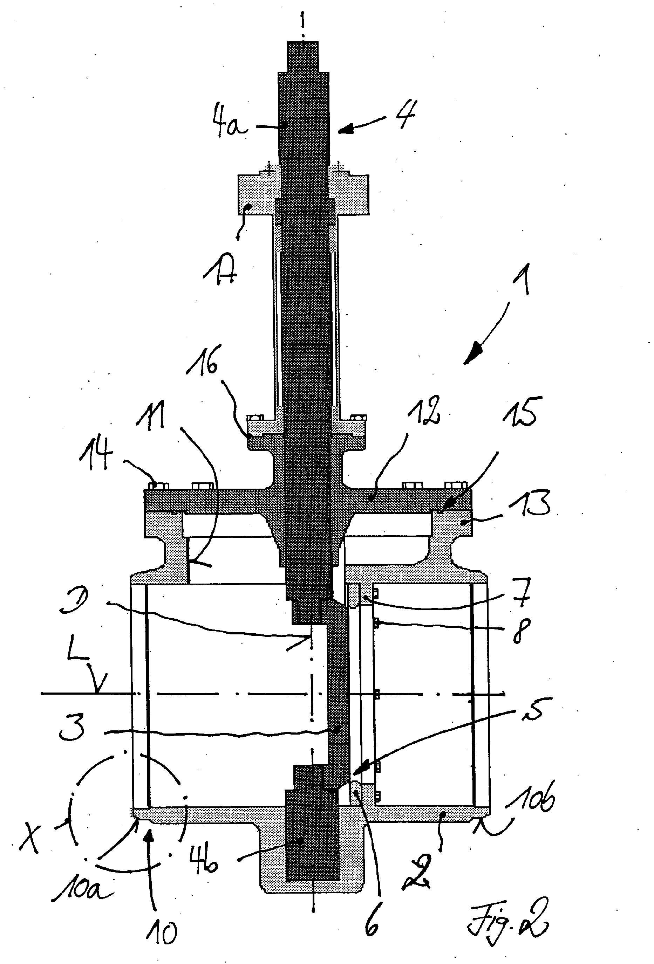

In den Figuren ist eine erfindungsgemäße, beispielsweise als Doppel-Exzenter-Absperrarmatur ausgebildete Tieftemperatur-Absperrarmatur 1 dargestellt. Die Absperrarmatur 1 weist ein Gehäuse 2 auf, in dem eine einen Ventilsitz 5 ansteuernde Absperrklappe 3 um eine Drehachse D schwenkbar gelagert ist. In der Figur 2 ist die Drehklappe 3 in der Absperrstellung dargestellt. Mittels einer bezüglich der Längsachse L geteilten Antriebswelle 4, die einen Wellenabschnitt 4a und einen Wellenabschnitt 4b umfasst, an denen die Absperrklappe 3 lösbar befestigt ist, kann die Absperrklappe 3 parallel zur Längsachse L und somit parallel zur Durchströmungsrichtung in eine Durchflussstellung gedreht werden.

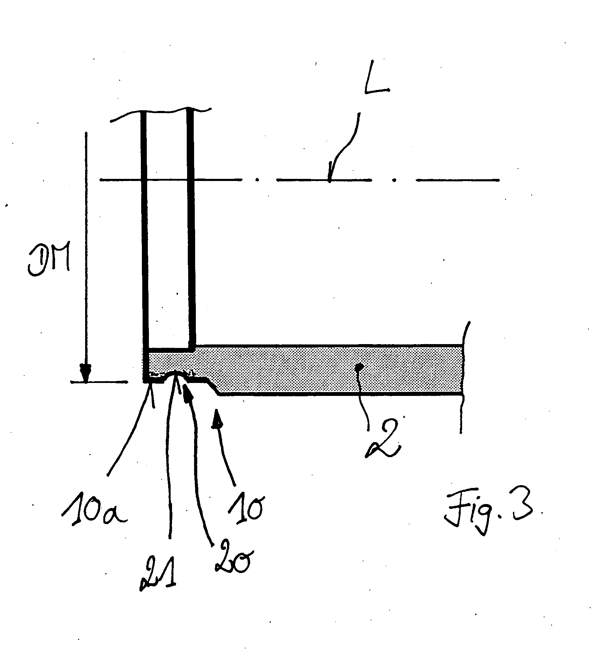

Erfindungsgemäß ist das Gehäuse 2 an den in der Figur 2 rechts und links dargestellten rohrseitigen Enden mit als Schweißflanschen 10a, 10b ausgebildeten Flanschen 10 versehen, mittels denen das Gehäuse 2 in einer zur Längsachse L koaxialen, nicht mehr dargestellten Rohrleitung befestigbar ist. Der Gehäusedurchmesser DM des Gehäuses 2 im Bereich des Schweißflansches 10a, 10b entspricht hierbei - wie in der Figur 3 verdeutlicht ist - dem Rohrdurchmesser der Rohrleitung, so dass die Schweißverbindung als Stumpfschweißverbindung ausgebildet werden kann.

An dem Gehäuse 2 ist erfindungsgemäß weiterhin senkrecht zur Drehachse D eine Gehäuseöffnung 11 ausgebildet, durch die die Absperrklappe 3 montierbar bzw. demontierbar ist.

In dem Gehäuse 2 ist ein ringförmiges Ventilsitzbauteil 6 angeordnet, an dem der Ventilsitz 5 ausgebildet ist. In dem Gehäuse 2 ist zur Befestigung des Ventilsitzbauteils 6 ein sich radial nach Innen erstreckender ringförmiger Flansch 7 ausgebildet, der als Schraubflansch ausgebildet ist, wobei das Ventilsitzbauteils 6 mittels Befestigungsschrauben 8 an dem Flansch 7 befestigbar ist. Zwischen der Absperrklappe 3 und dem Ventilsitzelement 6 kann ein nicht mehr dargestelltes Dichtungssystem, beispielsweise ein sogenanntes Block- and Bleed-Dichtungssystem, angeordnet werden.

Der Wellenabschnitt 4b der Antriebswelle 4 ist im Gehäuse 2 drehbar gelagert, wobei das Gehäuse 2 mit einer entsprechenden Lagerbohrung versehen ist.

Zur Lagerung des Wellenabschnittes 4a ist ein die Gehäuseöffnung 11 verschließendes Lagerbauteil 12 vorgesehen. Das Lagerbauteil 12 ist hierbei an dem Gehäuse 2 im Bereich der Gehäuseöffnung 11 mittels eines an der Gehäuseöffnung 11 ausgebildeten ringförmigen Befestigungsflansches 13 lösbar befestigt. Der Befestigungsflansch 13 ist hierbei als Schraubflansch ausgebildet, wobei das Lagerbauteil 12 mittels Befestigungsschrauben 14 an dem Gehäuse 2 befestigt werden kann.

Zwischen dem Befestigungsflansch 13 und dem Lagerbauteil 12 ist eine Zentrier- und Dichteinrichtung 15 vorgesehen, die von einer in dem Befestigungsflansch 13 ausgebildeten umlaufenden Nut und einem in die Nut eingreifenden, an dem Lagerbauteil 12 ausgebildeten Vorsprung gebildet ist.

An dem Lagerbauteil 12 ist weiterhin mittels eines als Schraubflansch ausgebildeten und Befestigungsschrauben 22 aufweisendem ringförmigen Befestigungsflansches 16 eine rohrförmiges Tragerbauteil 17 befestigt, an dem mittels eines als Schraubflansch ausgebildeten, Befestigungsschrauben 23 aufweisenden ringförmigen Befestigungsflansches 18 eine mit der Antriebswelle 4 und somit der Absperrklappe 3 in Wirkverbindung stehende Antriebseinrichtung 19 lösbar befestigt ist.

Der an dem Gehäuse 2 ausgebildete Schweißflansch 10a ist - wie aus der Figur 3 ersichtlich ist - von einer am Außenumfang des Gehäuses 2 angeordneten Umlaufnut gebildet, wobei im Bereich der Umlaufnut eine von einer Nut 21 gebildete Befestigungseinrichtung 20 für eine Prüfeinrichtung ausgebildet ist.

Zur Montage der Absperrarmatur 1 in der Rohrleitung wird das Gehäuse 2 mittels der Schweißflansche 10a, 10b und Stumpfschweißverbindungen mit der Rohrleitung verbunden. Hierdurch kann ohne zusätzliche Dichteinrichtungen und mit geringem Bauaufwand eine leckagefreie Verbindung des Gehäuses 2 mit der Rohrleitung erzielt werden. Die Absperrklappe 3 und das Ventilsitzbauteil 6 sind über die Gehäuseöffnung 11 montierbar- und demontierbar.

Das Lagerbauteil 12, in dem die Antriebswelle 4a gelagert ist, an dem die Absperrklappe 3 und die Antriebswelle 4b befestigt ist, und an dem mittels des Trägerbauteils 17 die Antriebseinrichtung 19 befestigt ist, sowie das Ventilsitzbauteil 6 kann hierbei vor oder nach dem Verschweißen des Gehäuses 2 mit der Rohrleitung mittels den Befestigungsschrauben 14, 8 an den Flanschen 13, 7 befestigt werden.

Zur Prüfung, insbesondere einem Dichtigkeitstest, der Absperrarmatur 1 vor dem Einbau des Gehäuses 2 in der Rohrleitung wird an den im Bereich der Schweißflansche 10a, 10b ausgebildeten Befestigungseinrichtungen 20 eine Prüfeinrichtung befestigt, beispielsweise mittels einer Klemmverbindung. Mit einer derartigen Prüfeinrichtung, die an der Absperrarmatur 1 mittels den Befestigungsflanschen 20 lösbar befestigt werden kann, kann nach der Herstellung der Absperrarmatur 1 und vor der Montage des Gehäuses 2 in der Rohrleitung auf einfache Weise eine Prüfung, insbesondere ein Dichtigkeitstest, der Absperrarmatur 1 durchgeführt werden.

Nach der Montage des Gehäuses 2 in der Rohrleitung und somit nach dem Verschweißen des Gehäuses 2 mit der Rohrleitung mittels der Schweißflansche 10a, 10b kann eine Überprüfung, insbesondere ein Dichtigkeits- und Funktionstest, der Absperrklappe 3 und des Ventilsitzes 5 auf einfache Weise durchgeführt werden, wenn ein Prüfgehäuse vorgesehen ist, in dem das mit der Absperrklappe 3 versehene Lagerbauteil 12 und das Ventilsitzbauteil 6 lösbar befestigbar ist. Hierzu ist das Lagerbauteil 12 mittels der Befestigungsschrauben 14 von dem Befestigungsflansch 13 des Gehäuses 2 zu lösen, wodurch die über die Antriebswelle 4a an dem Lagerbauteil 12 angeordnete Absperrklappe 3 zusammen mit der Antriebswelle 4b über die Gehäuseöffnung 11 aus dem Gehäuse 2 demontiert werden kann. Nach Lösen der Befestigungsschrauben 8 des Flansches 7 kann ebenfalls das Ventilsitzbauteil 6 über die Gehäuseöffnung 11 aus dem Gehäuse 2 demontiert werden.

Das mit den Antriebswellen 4a, 4b und der Absperrklappe 3 sowie der Antriebseinrichtung 19 versehene Lagerbauteil 12 und das Ventilsitzbauteil 6 können daraufhin in einem Prüfgehäuse angeordnet werden, wodurch ein Dichtigkeits- und Funktionstest der Absperrklappe 3 und des Ventilsitzbauteils 6 mit geringem Bauaufwand durchgeführt werden kann. Bei aus dem Gehäuse 2 entferntem Ventilsitzbauteil 6 und entferntem Lagerbauteil 12, an dem die Absperrklappe 3 befestigt ist, kann die Gehäuseöffnung 11 von einem Blindflansch verschlossen werden, der an dem Befestigungsflansch 13 mittels den Befestigungsschrauben 14 befestigt werden kann, wodurch die Gehäuseöffnung 11 auf einfache Weise verschlossen werden und somit ein weiterer Betrieb der mit der Rohrleitung versehenen Anlage ermöglicht werden.

## Patentansprüche

1. Tieftemperaturabsperrarmatur für kryogene Medien mit einem Gehäuse, einem in dem Gehäuse angeordneten Ventilsitz und einer den Ventilsitz ansteuernden Absperrklappe, die im Gehäuse drehbar gelagert ist, wobei an dem Gehäuse zumindest ein Flansch als Schweißflansch (10a, 10b) zur Befestigung der Tieftemperaturabsperrarmatur in einer Rohrleitung mittels einer Schweißverbindung, insbesondere einer Stumpfschweißverbindung, ausgebildet ist und das Gehäuse (2) mit einer Gehäuseöffnung (11) zur Montage und/oder Demontage der Absperrklappe (3) versehen ist,
**dadurch gekennzeichnet,**
**dass** die Absperrklappe (3) mit einer Antriebswelle (4) in Wirkverbindung steht, die in einem die Gehäuseöffnung (11) verschließenden Lagerbauteil (12) gelagert ist, wobei das Lagerbauteil (12) an dem Gehäuse (2) im Bereich der Gehäuseöffnung (11) lösbar befestigt ist.

2. Tieftemperaturabsperrarmatur nach Anspruch 1, **dadurch gekennzeichnet, dass** der Ventilsitz (5) an einem Ventilsitzbauteil (6) ausgebildet ist, das im Gehäuse (2) mittels eines Flansches (7), insbesondere eines Schraubflansches, lösbar befestigt ist, wobei das Ventilsitzbauteil (6) durch die Gehäuseöffnung (11) montierbar und/oder demontierbar ist.

3. Tieftemperaturabsperrarmatur nach Anspruch 1 oder 2, **dadurch gekennzeichnet, dass** die Gehäuseöffnung (11) senkrecht zur Drehachse (D) der Absperrklappe (3) angeordnet ist.

4. Tieftemperaturabsperrarmatur nach einem der Ansprüche 1 bis 3, **dadurch gekennzeichnet, dass** die Antriebswelle (4) einen in dem Lagerbauteil (12) gelagerten Wellenabschnitt (4a) und einen in dem Gehäuse (2) gelagerten Wellenabschnitt (4b) aufweist, wobei die Absperrklappe (3) an den Wellenabschnitten (4a, 4b) lösbar befestigt ist.

5. Tieftemperaturabsperrarmatur nach einem der Ansprüche 1 bis 4, **dadurch gekennzeichnet, dass** an dem Lagerbauteil (12) eine mit der Antriebswelle (4) in Wirkverbindung stehende Antriebseinrichtung (19) befestigt ist.

6. Tieftemperaturabsperrarmatur nach einem der Ansprüche 1 bis 5, **dadurch gekennzeichnet, dass** an der Gehäuseöffnung (11) ein Befestigungsflansch (13), insbesondere ein Schraubflansch, zur Befestigung des Lagerbauteils (12) ausgebildet ist.

7. Tieftemperaturabsperrarmatur nach Anspruch 6, **dadurch gekennzeichnet, dass** zwischen dem Befestigungsflansch (13) und dem Lagerbauteil (12) eine Zentrier- und/oder Dichteinrichtung (15) angeordnet ist.

8. Tieftemperaturabsperrarmatur nach Anspruch 7, **dadurch gekennzeichnet, dass** die Zentrier- und/oder die Dichteinrichtung (15) als ein in einer umlaufenden Nut angeordneter Vorsprung ausgebildet ist.

9. Tieftemperaturabsperrarmatur nach einem der Ansprüche 1 bis 8, **dadurch gekennzeichnet, dass** an dem Gehäuse (2) im Bereich des Schweißflansches (10a, 10b) eine Befestigungseinrichtung (20) zum lösbaren Befestigen einer Prüfeinrichtung ausgebildet ist.

10. Tieftemperaturabsperrarmatur nach Anspruch 9, **dadurch gekennzeichnet, dass** die Befestigungseinrichtung (20) als eine an dem Gehäuse (2) angeordnete umlaufende Nut (21) ausgebildet ist.

## Claims

1. Low-temperature shut-off fitting for cryogenic media having a housing, a valve seat which is arranged in the housing, and a shut-off valve which actuates the valve seat and is mounted rotatably in the housing, at least one flange being configured on the housing as a welded flange (10a, 10b) for fastening the low-temperature shut-off fitting in a pipeline by means of a welded connection, in particular a butt-welded connection, and the housing (2) being provided with a housing opening (11) for mounting and/or dismantling the shut-off valve (3), **characterized in that** the shut-off valve (3) is operatively connected to a drive shaft (4) which is mounted in a bearing component (12) which closes the housing opening (11), the bearing component (12) being fastened releasably to the housing (2) in the region of the housing opening (11).

2. Low-temperature shut-off fitting according to Claim 1, **characterized in that** the valve seat (5) is formed on a valve-seat component (6) which is fastened releasably in the housing (2) by means of a flange (7), in particular a bolt flange, it being possible for the valve-seat component (6) to be mounted and/or dismantled through the housing opening (11).

3. Low-temperature shut-off fitting according to Claim 1 or 2, **characterized in that** the housing opening (11) is arranged perpendicularly with respect to the rotational axis (D) of the shut-off valve (3).

4. Low-temperature shut-off fitting according to one of Claims 1 to 3, **characterized in that** the drive shaft (4) has a shaft section (4a) which is mounted in the bearing component (12) and a shaft section (4b) which is mounted in the housing (2), the shut-off valve (3) being fastened releasably to the shaft sections (4a, 4b).

5. Low-temperature shut-off fitting according to one of Claims 1 to 4, **characterized in that** a drive device (19) which is operatively connected to the drive shaft (4) is fastened to the bearing component (12).

6. Low-temperature shut-off fitting according to one of Claims 1 to 5, **characterized in that** a fastening flange (13), in particular a bolt flange, is formed on the housing opening (11) for fastening the bearing component (12).

7. Low-temperature shut-off fitting according to Claim 6, **characterized in that** a centring and/or sealing device (15) is arranged between the fastening flange (13) and the bearing component (12).

8. Low-temperature shut-off fitting according to Claim 7, **characterized in that** the centring and/or sealing device (15) is configured as a projection which is arranged in a circumferential groove.

9. Low-temperature shut-off fitting according to one of Claims 1 to 8, **characterized in that** a fastening device (20) for releasably fastening a test device is formed on the housing (2) in the region of the welded flange (10a, 10b).

10. Low-temperature shut-off fitting according to Claim 9, **characterized in that** the fastening device (20) is configured as a circumferential groove (21) which is arranged on the housing (2).

## Revendications

1. Robinet d'arrêt cryogénique pour milieux cryogéniques, comprenant un boîtier, un siège de soupape disposé dans le boîtier et un clapet d'arrêt commandant le siège de soupape, lequel clapet d'arrêt est monté à rotation dans le boîtier, au moins une bride sous forme de bride soudée (10a, 10b) étant réalisée sur le boîtier pour la fixation du robinet d'arrêt cryogénique dans une conduite tubulaire au moyen d'une liaison par soudage, notamment d'une liaison par soudage bout à bout, et le boîtier (2) étant pourvu d'une ouverture de boîtier (11) pour le montage et/ou le démontage du clapet d'arrêt (3),
**caractérisé en ce que**
le clapet d'arrêt (3) est en liaison fonctionnelle avec un arbre d'entraînement (4), qui est monté dans un composant de palier (12) fermant l'ouverture de boîtier (11), le composant de palier (12) étant fixé de manière amovible sur le boîtier (2) dans la région de l'ouverture de boîtier (11).

2. Robinet d'arrêt cryogénique selon la revendication 1, **caractérisé en ce que** le siège de soupape (5) est réalisé sur un composant de siège de soupape (6) qui est fixé de manière amovible dans le boîtier (2) au moyen d'une bride (7), en particulier d'une bride filetée, le composant de siège de soupape (6) pouvant être monté et/ou démonté à travers l'ouverture de boîtier (11).

3. Robinet d'arrêt cryogénique selon la revendication 1 ou 2, **caractérisé en ce que** l'ouverture de boîtier (11) est disposée perpendiculairement à l'axe de rotation (D) du clapet d'arrêt (3).

4. Robinet d'arrêt cryogénique selon l'une quelconque des revendications 1 à 3, **caractérisé en ce que** l'arbre d'entraînement (4) présente une portion d'arbre (4a) montée dans le composant de palier (12) et une portion d'arbre (4b) montée dans le boîtier (2), le clapet d'arrêt (3) étant fixé sur les portions d'arbre (4a, 4b).

5. Robinet d'arrêt cryogénique selon l'une quelconque des revendications 1 à 4, **caractérisé en ce qu'**un dispositif d'entraînement (19) en liaison fonctionnelle avec l'arbre d'entraînement (4) est fixé sur le composant de palier (12).

6. Robinet d'arrêt cryogénique selon l'une quelconque des revendications 1 à 5, **caractérisé en ce qu'**une bride de fixation (13), notamment une bride filetée, est réalisée au niveau de l'ouverture de boîtier (11) pour la fixation du composant de palier (12).

7. Robinet d'arrêt cryogénique selon la revendication 6, **caractérisé en ce qu'**un dispositif de centrage et/ou d'étanchéité (15) est disposé entre la bride de fixation (13) et le composant de palier (12).

8. Robinet d'arrêt cryogénique selon la revendication 7, **caractérisé en ce que** le dispositif de centrage et/ou d'étanchéité (15) est réalisé sous forme de saillie disposée dans une rainure périphérique.

9. Robinet d'arrêt cryogénique selon l'une quelconque des revendications 1 à 8, **caractérisé en ce qu'**un dispositif de fixation (20) pour la fixation amovible d'un dispositif de contrôle est réalisé sur le boîtier (2) dans la région de la bride de soudage (10a, 10b).

10. Robinet d'arrêt cryogénique selon la revendication 9, **caractérisé en ce que** le dispositif de fixation (20) est réalisé sous forme de rainure périphérique (21) disposée sur le boîtier (2).
